# EUROPEAN PATENT APPLICATION

(11) **EP 2 949 433 A1**
(43) Date of publication of application: **02.12.2015**
(21) Application number: 15169598.8
(22) Date of filing: 28.05.2015
(51) Int. Cl.: B25J 15/06

(54) **A DEVICE FOR MANIPULATING OBJECTS ESPECIALLY SACKS, BY MEANS OF SUCTION**

(30) Priority: 28.05.2014 IT VR20140149
(71) Applicant: ATIS S.r.l., 38017 Mezzolombardo (Trento) (IT)
(72) Inventor: Pancheri, Fulvio Italo, 38020 Livo (Trento) (IT)
(74) Representative: Anselmi, Davide

(57) **Abstract**

The device for manipulating objects (2), in particular sacks, by means of suction comprises a hollow body (3) having a contact portion (4) suitable for coming into contact with a surface of the objects (2); vacuum generating means (7) and contact detecting means for detecting contact between the contact portion (4) and the surface of the objects (2).

The vacuum generating means (7) are operatively connected to the inside of the hollow body (3) for generating a vacuum suitable for causing adherence of a portion of the surface of the objects (2) to the contact portion (4).

The means for detecting the contact between the contact portion (4) and the surface the objects (2) are operationally connected to the vacuum generating means (7) so as to activate the vacuum generating means (7) after contact has been made.

## Description

The invention relates to a device for manipulating objects, in particular sacks, by means of suction.

The invention is applicable in any sector where it is necessary to move and raise objects, for example sacks filled with material.

Consider, for example, sacks of flour, soil, cement or any other material which can be contained inside a deformable containing wrapper, which is to be moved or raised from a point to another.

Generally speaking, moving the sacks is done manually; that is, the operator grips the sack with his arms and the conveys it to its destination. As an alternative to manual movement sacks, manipulating devices connected to manipulators can be used.

In general, manipulating devices help an operator to manually move objects in space while avoiding the stresses which can be harmful to the health of the operator, enabling movement of overhanging loads in any direction without constraints and with extreme freedom.

The prior art comprises manipulating devices connected to a mechanical arm of a handling device which by means of suction hold a sack suspended in the air and enable the operator to move it where required without effort.

These devices are equipped with a suction area internally of a hollow body and with two buttons, which activate and deactivate the suction.

The means generating the suction are generally located outside the device and are connected to the device via a suction conduit.

Operation of suction-operated manipulating devices of the prior art can be summarised as follows. The device with the suction area is initially positioned facing towards the sack to be moved, and then the hollow body is made to adhere to a portion of external surface of the sack. At this point a suction device is manually activated, connected to the hollow body of the device, for example an electrical suction device operating by compressed air, which sucks the deformable surface of the sack from the lower zone of the device and thus enables the sack to be raised, retained by the hollow body by suction effect.

In practice, the suction device is actuated vertically so as to lift and move a sack from one position to another with the aim of assisting the operator in the sack movement operations.

The prior art technique has several drawbacks, however.

Firstly, when the operator nears the device to the sack, the device must carefully push the hollow body where the suction zone is located against the sack and at this point the suction must be manually activated. This operating sequence is relatively imprecise and results in a loss of time.

It has often been found that the operators, for convenience and to save time, activate the suction even before having neared the hollow body to the sack and before having ensured the correct and precise adhesion between the two, thus wasting electricity and risking suction of other objects.

Not less important, in this way there exists the risk that the operator might by injured if his clothes or potentially dangerous objects are drawn towards the object by the free sucking flow generated.

Another disadvantage of suction devices applied to the reference technical sector prior art, is the constant risk of accidental release of the bag suspended by suction during the movement.

In fact, as the connection between the hollow body and the sack is obtained exclusively by the suction effect of the sack surface, it is possible that by activating the suction before nearing the hollow body to the sack, the connection between the two elements is not perfect and results in an air disconnection that is very risky for the well-being of the operator and any underlying objects. The sack could inadvertently fall on the operator's feet, leading to serious injury, or it might fall to the ground and break, pouring its contents onto the ground, or it might even fall on other work processes.

Accidental disengagement can occur as a result of a wrong positioning of the device on the bag leading from the imprecision of the operator, or it can happen following an involuntary pressure on the suction deactivating button, which during the movement operations can happen inadvertently. In this context, the technical purpose underpinning the present invention is to provide a device for manipulating objects by means of suction, in particular sacks, which obviates one or more of the drawbacks of the prior art.

In particular, the aim of the present invention is to provide a manipulating device for manipulating objects by suction, in particular sacks, able to guarantee an excellent grip of the object.

A further aim of this invention is to provide a device for manipulating objects by means of suction, in particular sacks, which is safe and prevents the accidental release of the object during the movement in suspension.

The set technical objective and the specified aims are substantially attained by a device for manipulating objects by suction comprising the technical characteristics described in one or more of the appended claims. In particular, the present invention comprises a device for manipulating objects by means of suction, in particular sacks comprising a hollow body, vacuum generating means and means for detecting the contact between a contact surface of the hollow body and a surface of the objects.

The vacuum generating means are operatively connected to the inside of the hollow body so as to generate a vacuum in order for a portion of the surface of the objects to be made to adhere to the contact portion.

The contact detecting means are operatively connected to the vacuum generating means so as to activate them after contact has been made. The dependent claims, incorporated herein for reference, relate to different embodiments of the invention.

Further characteristics and advantages of the invention will become more apparent in the non-limiting description that follows of a preferred embodiment of a device for manipulating objects by means of suction, especially sacks, as illustrated in the accompanying drawings, in which:
- figure 1 is a schematic perspective view of a device for manipulating objects by means of suction, in particular sacks according to this invention,
- figure 2 is a schematic view from below of in a different perspective of the device of figure 1,
- figure 3 is a schematic view of a manipulator comprising a device of figure 1 according to the present invention during a possible operating configuration, and
- figure 4 is a schematic diagram of a possible functioning of the device according to the invention.

With reference to the accompanying drawings, reference numeral 1 denotes in its entirety a device for manipulating objects by means of suction, in particular sacks.

The device 1 for manipulating objects 2 by means of suction, in particular sacks, comprises a hollow body 3 having a contact portion 4 designed to come into contact with a surface of the objects 2.

Note that the term object 2 in the present document relates to any object having a deformable surface, with the accompanying drawings more specifically relating to sacks.

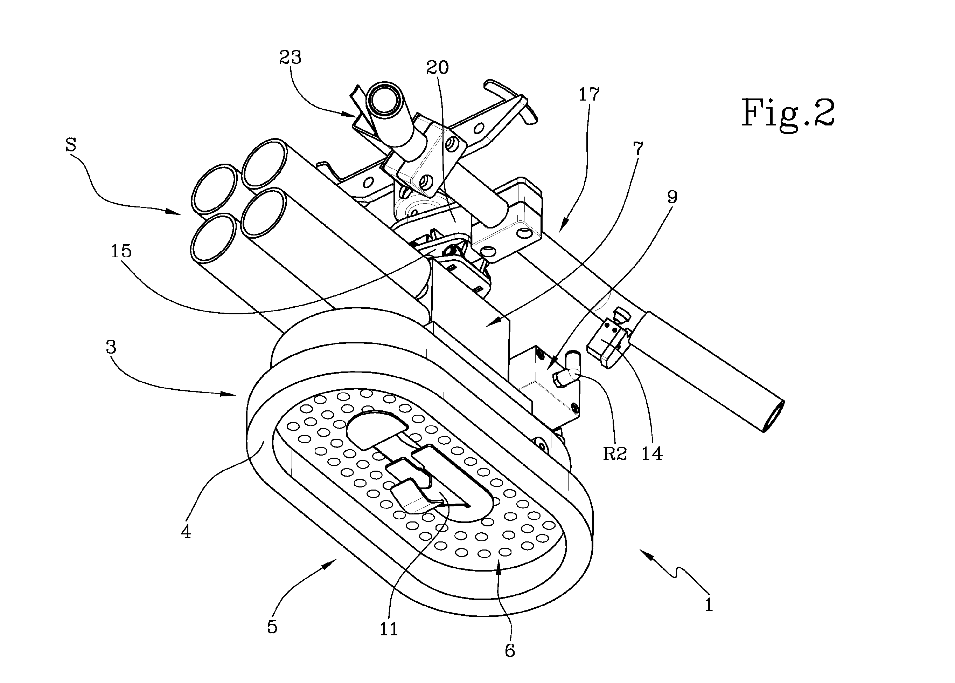

The contact portion 4 of the hollow body 3 defines a suction mouth 5 of the device 1, as illustrated in figure 2.

The contact portion 4 is preferably covered by a deformable material, still more preferably a non-porous deformable material; in this way adhesion to the surfaces of the sacks 2 is facilitated.

The hollow body 3 comprises a perforated suction surface 6, arranged internally of the hollow body 3 itself. In this way the presence of the perforated suction surface 6 inside the hollow body 3 advantageously allows suction of air only through the holes, thus preventing the surface of the aspirated sack 2 from being sucked to the point of reaching the source of the suction. This is guaranteed also owing to the rigidity of the suction surface 6 which provides excellent resistance to the stresses induced by the pressure of the sack 2 on the suction surface 6 itself. The surface of the suction surface 6 is preferably metallic.

The device 1 comprises vacuum generating means 7 operatively connected to the inside of the hollow body 3 so as to generate a vacuum so that a portion of the surface of the sacks 2 can be made to adhere to the contact portion 4.

Therefore the suction surface 6 is configured so as to be interposed between the vacuum generating means 7 and the surface of the sack 2. The vacuum generating means 7 are preferably built into the hollow body 3. In particular, the vacuum generating means, necessary for obtaining suction of the surface of the sack 2 and able to create a suspension of the sack 2 so as to be able to move it, can be a suction system or a compressed air system.

In the first case, a suction system is present upstream of the manipulating device 1 and comprises a tube internally of which the air suction is created. The tube extends up to the hollow body 3 so as to generate the vacuum.

Alternatively, the suction system is part of the suction device 1 and is operatively connected to the inside of the hollow body 3 in order for a vacuum to be generated.

In the preferred embodiment, compressed air is used for generating the vacuum.

The compressed air is conveyed towards the device 1 via a conduit, not illustrated in the accompanying drawings. In a possible embodiment, for example illustrated in the accompanying drawings, an inlet section 8 of the compressed air into the device 1 is realised with a connector fitted into a pneumatic distributor 9 of the device 1.

The device 1 is advantageously further equipped with a silencer unit S connected to the hollow body 3, for reducing the noise deriving from the vacuum generating means 7.

The vacuum generating means 7 comprise an ejector 10, of known type, operatively connected to the hollow body 3 in such a way that a Venturi effect generates a negative pressure at the inlet mouth 5.

In particular, the pneumatic distributor 9 is connected to the ejector 10 so as to create the passage of air towards the ejector 10. More specifically, the pneumatic distributor 9 is designed to assume at least an activated configuration thereof, during which the air passes towards the ejector 10, and a de-activated configuration thereof, during which the air does not pass towards the ejector 10. In other words, during the activated configuration the suction of the surface of the object 2 is activated, while during the de-activated configuration the suction of the surface of the object 2 is de-activated.

Further, the ejector 10 has a rear outlet section connected to the silencing unit S mentioned in the foregoing.

The device 1 of the present invention comprises contact detecting means for detecting contact between the contract portion 4 and the surface of the object 2, which are operatively connected to the vacuum generating means 7 so as to activate them after contact has been made.

The contact detecting means are configured such as to send a preferably pneumatic activating signal S1 to the pneumatic distributor 9 so that it assumes the activated configuration following contact between the contact portion 4 and the surface of the sack 2. The signal S1 is sent for example via a connector R1 located in the pneumatic distributor 9.

In this way the operator no longer has to manually activate the suction as occurred in the devices of the prior art, but the activating of the vacuum generating means 7 is automatically done following an operating logic which will be more fully explained in the following.

With reference to figure 2, the contact detecting means comprise a detecting element configured to pass, following contact with the surface of the objects, from a rest configuration where it is close to the contact portion 4 in the direction of movement of the device 1 towards the object 2, to a detection configuration where it is distanced from the contact portion in the direction of movement of the device 1 away from the object 2.

In particular, the detecting element is configured so as to pass, following contact with the surface of the object 2, from a rest configuration in which it is at least partly protruding from the contact portion 4, to a detection configuration in which the detecting element does not protrude with respect to the contact portion 4.

The detecting element is preferably positioned at least partly inside the suction inlet mouth 5 of the hollow body 3 and even more preferably is hinged to the suction surface 6. Alternatively, the detecting element could be located externally of the inlet mouth 5 in a flanked position to the hollow body 3.

The detecting element is preferably a lever 11 hinged to the hollow body 3, though it might also be a piston or a sensor or in general a probe.

Preferably therefore the lever 11 is configured such as to pass from the rest configuration where it is at least partly protrudes relative to the suction surface 6 towards the outside of the hollow body 3, to the detecting configuration in which it is retracted internally of the suction surface 6 towards the inside of the hollow body 3.

In other words during the positioning step of the device 1 above an object 2 to be lifted, when the lever 11 comes into contact and is pressed by the sack 2 towards the inside of the hollow body 3, the vacuum generating means 7 are automatically activated without any need for further manual activation on the part of the operator who is controlling the device.

As it is retracted internally of the hollow body 3 following crushing against a sack 2, the lever 11 preferably sets a shaft 12, on which it is keyed, in rotation, which in turn causes a cam element 13 to rotate. The cam element 13 when rotating presses on a switch 13a which sends the activating signal S1 of the vacuum generating means 7 to the pneumatic distributor 9.

The device 1 comprises a manual release organ 14 configured so as to de-activate the vacuum generating means 7 and thus release the sack 2. However, it should be noted that the device also comprises means for detecting the presence of the object 2 in contact with the contact portion 4 and configured so as to detect the weight of the object 2 in such a way that the sack 2 is released following the command by the manual release organ 14 only if the sack 2 has been resting on the ground or on a supporting surface.

In particular, the manual release organ 14 is configured so as to send a de-activating signal of the operation S2 to the pneumatic distributor 9 for switching the pneumatic distributor 9 into the de-activated configuration in such a way as to interrupt the suction so that the sack 2 is released. In other words, the manual release organ 14 is used to command the release of the sack 2 from the contact portion 4.

It should be noted that the presence detecting means of the object 2 are interposed between the manual release organ 14 and the pneumatic distributor 9, in contact with the contact portion 4, thus releasing the sack 2 only when the sack 2 has been rested on the ground or on a support surface.

The presence detecting means of the object 2 are advantageously sensitive to the weight of the object 2 and are configured so as to send the deactivating signal S2, preferably pneumatic, to the pneumatic distributor 9 only when the weight of the object 2 is resting on a supporting surface. The signal S2 is sent for example via a connector R2 positioned in the pneumatic distributor 9. The deactivating signal S2 sent enables release of the object 2

When the sack has been moved into the destination position thereof in which it is resting on a surface, by activating the manual release 14 the operator can safely release the object from the device 1, since the means for detecting the presence of the object 2 have recognised that the object is bearing on a surface (and is therefore it is not dangerously suspended in the air) and the vacuum generating means 7 are correctly deactivated. The manipulating device 1 comprises means for assisted lowering 14a of the hollow member 3 and configured to be activated by the manual release organ 14.

In particular the manual release organ 14 is operatively connected to means for assisted lowering 14a of the hollow body 3 and to the pneumatic distributor 9 so as to send the deactivating signal S2 of the ejector 10 to the pneumatic distributor 9.

Therefore the device 1 prevents the object 2 from becoming accidentally detached during the movement step, thus avoiding the connected risks which might ensue from an unexpected fall.

If, during the step of moving of the sack 2 suspended in the air, the operator accidentally activates the manual release organ 14, the device 1 immediately detects, via the presence detecting means of the object 2 in contact with the contact portion 4, for example a weight sensor, that the object 2 is not resting on a supporting surface and consequently does not allow release thereof.

The release operation thus acts as a controlled system which improves the safety conditions of the processing steps.

In particular, the assisted lowering means 14a of the hollow body 3 may be further configured to enable descent of the hollow body 3 following the activation of the manual release 14 organ, in a case where the reference object 2 is not resting on a supporting surface.

In other words, the manual release organ 14 is operatively connected to the means 14a for the assisted lowering of the hollow member 3 and to the pneumatic distributor 9 to send an enabling signal S3 to the assisted lowering means 14a when the manual release organ 14 is activated and the means for detecting the presence of the object 2 detect that the object 2 is suspended in air.

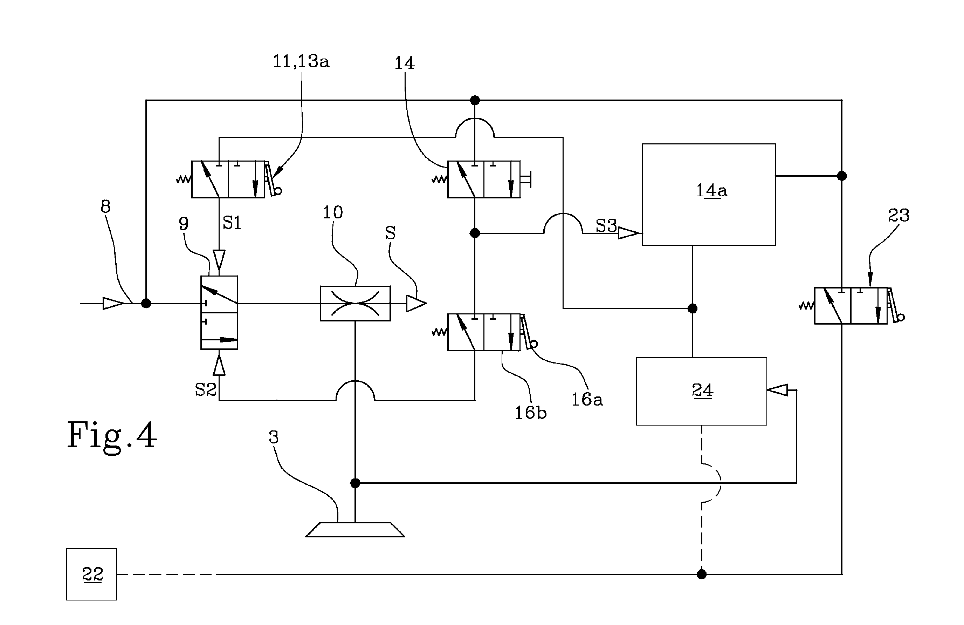

As illustrated for example in figure 4, the manual release organ 14 is configured so as to send the enabling signal S3, preferably pneumatic, to the assisted lowering means 14a, such that the hollow body 3 can descend towards the underlying supporting surface for example by effect of the weight of the object 2. When the object 2 associated to the hollow body 3 touches the supporting surface, the presence detecting means of the object 2 are configured so as to send the deactivating signal S2 to the pneumatic distributor 9.

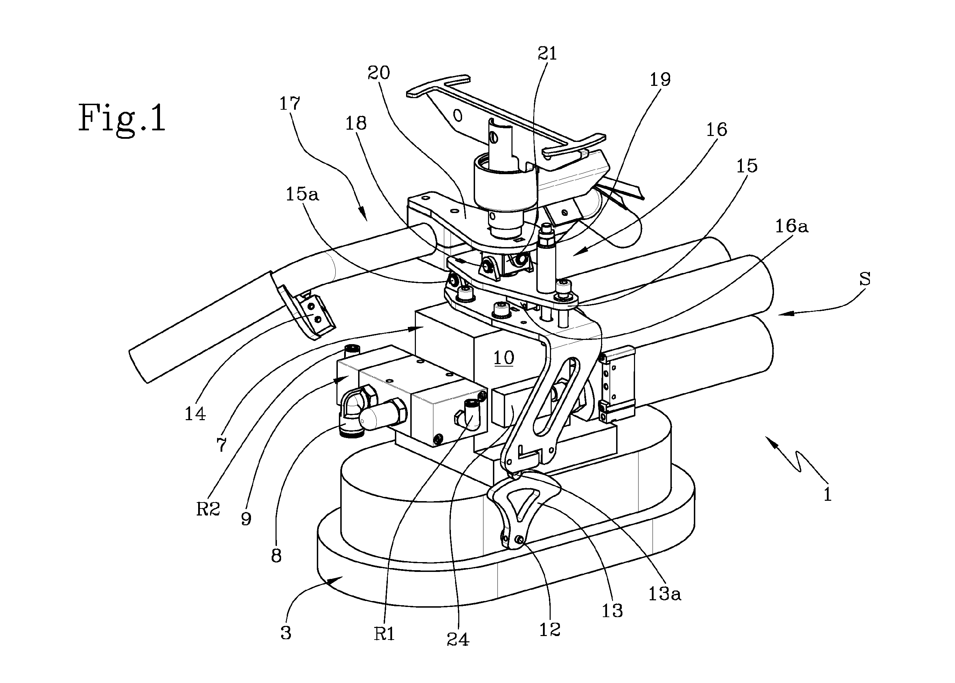

A possible embodiment of the presence detecting means of the object 2 is illustrated in figures 1 and 2, where the hollow body 3 is mounted on a suspension element 15 and is movable relative thereto between at least one distal position following the action of the weight of the suspended object 2 and a proximal position following the coming to rest of the object 2 on the supporting surface.

In particular in an embodiment of the present invention the suspension element 15 is preferably a plate connected to the hollow body 3 by a hinge 15a. The hollow body 3 can therefore pass from the a distal position with respect to the suspension element 15 to the proximal position, simply by rotating about the rotation axis of the hinge 15a so as to reduce the angle between the two elements.

The presence detecting means of the object 2 are preferably configured so as to detect the distance between the suspension element 15 and the hollow body 3 and/or the configuration of elastic elements 16 (preferably a spring) operating between the suspension element 15 and the hollow body 3. In particular reference numeral 16a denotes a sensor suitable for the purpose and operatively connected to a pneumatic valve designed to enable sending of the deactivating signal S2 to the pneumatic distributor 9. In a possible embodiment, the device 1 of the invention comprises a gripping member 17 for a manual movement device 1 in space, performed by the operator, and orientating means for orientating the gripping member 17 during use.

The orientation means comprising a first hinge 18 having a rotation axis perpendicular to a rotation axis of a second hinge 19 solidly constrained to and located above the first hinge 18. In other words, the hinges 18 and 19 together form a universal joint.

The gripping member 17 and the hinges 18,19 advantageously allow agile and gentle movement of the device 1 in space by the operator.

The orientation means are preferably interposed between the gripping member 17 and the hollow body 3. Still more preferably, the orientation means are interposed between the gripping member 17 and the suspension element 15.

In particular the gripping member 17, as illustrated in the appended figures of the drawings, is preferably a handlebar connected directly to the suspension element 15 by means of an articulation comprising a cam 20 capable of simulating the weight resting on the supporting surface.

In fact once the sack 2 is raised, the lever 11 remains activated and it is not possible to release the sack 2 unless to rest it on a surface.

The only way to release the suspended sack 2, deliberately and in a controlled way, (for example so as to release it inside a crate) is to apply a pulsed force to the gripping member 17, applied by the operator.

Using the gripping member 17, the operator can advantageously rotate the cam 20 along the rotation axis of the hinge 18 in such a way as to push an edge of a box element 21, mounted on the hinges 18,19, towards the hollow body 3, nearing the suspension element 15 to the hollow body 3 as when the object 2 is resting on a supporting surface. In this situation, the elastic elements 16 detect a nearing between the suspension element 15 and the hollow body 3 (this nearing simulates the lightening of the hollow body 3 following the depositing of the sack 2) and enable a deactivating signal S2 to be sent for release of the sack 2.

In other words, in this way it is advantageously possible to achieve controlled unhooking of the suspended object 2, by-passing the safety system of the device 1, having simulated resting the object on a supporting surface.

In another embodiment, not illustrated in the accompanying drawings, the gripping member 17 is preferably a handlebar connected directly to the suspension element 15. In this way, the gripping member 17 is integral with the hollow body 3. In particular, the gripping member 17 is integral with the hollow body 3 and the movement of the gripping member 17 acts directly on the elastic elements 16 to release the sack 2 even when suspended in the air.

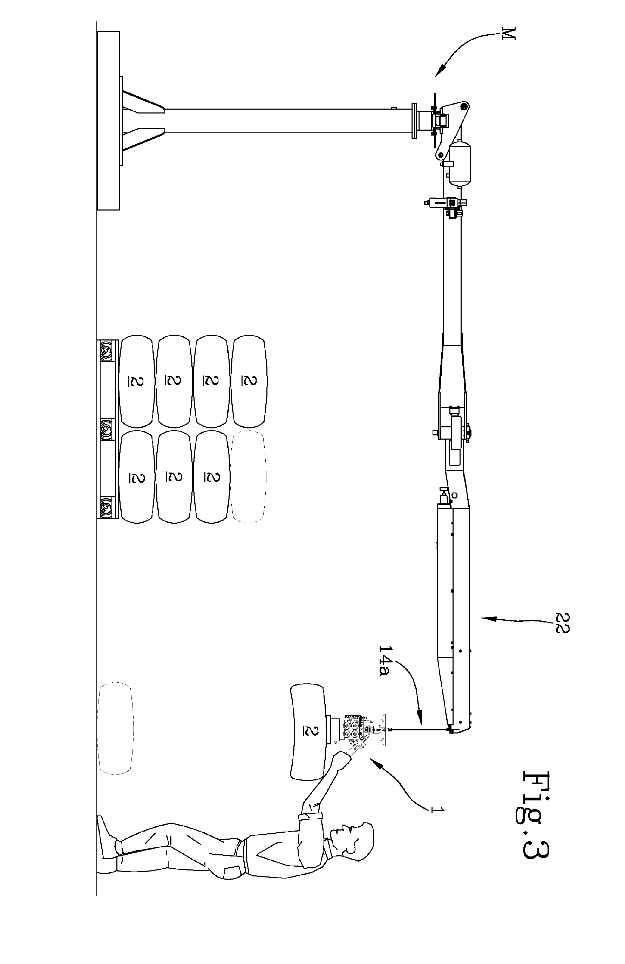

With reference to figure 3, the device 1 according to the invention may be applied to a manipulating device M of the type described in patent application no. VR2013A000011, wherein, instead of the tool connected to the end of the mechanical arm, a manipulating device 1 operating by suction can be connected for objects 2 of the type described up to this point in the present description.

The device 1 is mainly used in pneumatic manipulators M and is securely engaged with an end of a mechanical movement unit, preferably a mechanical arm 22, but it may also be applied, in an embodiment not illustrated in the accompanying drawings, for any mechanical arm connected for example to the ceiling of a building.

The manipulating device 1 preferably comprises a system for locking the mechanical arm 22 in the rest configuration, this locking system being able to be activated preferably by means of a brake lever 23 located on a handgrip member 17 of the device 1.

In this way, when the device 1 is not in use, that is, during the rest configuration thereof, the operator can activate the locking of the mechanical arm 22 to prevent the arm and the device 1 from accidentally moving and inadvertently colliding with objects and/or persons.

In a possible embodiment, vacuum measuring means 24 are included internally of the hollow body 3, operatively connected to the mechanical organ for moving the hollow body 3.

In other words, the device 1 comprises vacuum measuring means 24 internally of the hollow body 3 operatively connected to the mechanical movement organ, preferably a mechanical arm 22, of the hollow body 3.

The device 1 functioning is briefly shown in the schematic diagram of figure 4, with particular emphasis on the signals exchanged between the various elements making up the manipulator-device-object system and the passage of the compressed air.

The compressed air entering the inlet section 8 of the pneumatic distributor 9 is sent to the ejector 10 by means of an internal valve group which opens or closes the air passage commanded by the pneumatic distributor 9.

The activation of the pneumatic distributor 9 is obtained by means of the activating signal S1 coming from the lever 11 (detection element) by means of interposing the switch 13a.

For the controlled release of the object 2, the manual release element 14 is used to send the deactivating signal S2 to the pneumatic distributor 9. The manual release element 14 preferably first sends an enabling signal S3 to the assisted lowering means 14a such that the detachment of the object 2 does not occur when the object itself is suspended. Following the descent of the object 2, the sensor 16a detects the nearing of the suspension element 15 to the hollow body 3, enabling sending the deactivating signal S2 to the pneumatic distributor 9.

To by-pass the descent of the object 2 for the purpose of detaching the hollow body 3, the operator can act on the gripping member 17 for simulating the resting of the weight on the supporting surface unit as described above.

The invention achieves the set aim by obviating the drawbacks of the prior art.

In particular the suction of the object 2 is activated only when there is contact between the hollow body 3 and the object 2 and thanks to a safety system the object 2 is prevented from being uncontrolledly released as it moves.

In this way there is an energy saving since the suction is activated only when required.

Further, the suction is only activated when the sack is at a position suitable for remaining attached to the hollow body in such a way as to prevent accidental detachments of the sack when suspended in the air.

## Claims

1. A device for manipulating objects (2) by means of suction, especially sacks, comprising:
a hollow body (3) having a contact portion (4) adapted to come into contact with a surface of the objects (2),
depression generating means (7) operatively connected to an inside of the hollow body (3) for generating a depression for gluing a portion of the surface of the objects (2) to the contact portion (4), the depression generating means (7) comprising a pneumatic distributor (9) operatively connected to an ejector (10) operatively connected to a hollow body (3) and such that using a Venturi effect it generates a depression operating at an aspirating mouth (5); the pneumatic distributor (9) being able to assume at least an activating configuration of the ejector (10) and a deactivating configuration of the ejector (10);
**characterised in that** it comprises means for detecting the contact between the contact portion (4) and the surface of the objects (2), wherein the means for detecting the contact are operatively connected to the vacuum generating means (7) so that they can be activated after contact has been made; the contact detecting means being configured so as to send an activating signal (S1) to the pneumatic distributor (9) in such a way that it assumes the activation configuration following contact between the contact portion (4) and the surface of the objects (2).

2. The device for manipulating according to claim 1, wherein the contact detecting means comprise a contact detecting element configured so as to pass, following contact with the surface of the objects (2), from a rest configuration thereof where it is in proximity of the contact portion (4) in the movement direction of the device (1) towards the object (2), to a detection configuration in which it is distant from the contact portion (4) in the movement direction of the device (1) distancingly from the object (2).

3. The device for manipulating according to claim 2, wherein the detecting element in the rest configuration at least partly protrudes from the contact portion (4); the detecting element in the detection configuration not protruding from the contact portion (4).

4. The device for manipulating according to one of claims 2 or 3, wherein the detecting element is a lever (11) hinged to the hollow body (3).

5. The device for manipulating according to one or more of claims 2-4, wherein the contact portion (4) defines a suction mouth (5) of the hollow body (3) and wherein the detecting element is located at least partly internally of the suction mouth (5).

6. The device for manipulating according to one or more of the preceding claims, wherein the hollow body (3) comprises a perforated suction surface (6) located inside the hollow body (3) and positioned in such a way as to be interposed between the vacuum generating means (7) and the surface of the object (2).

7. The device for manipulating according to claim 6 when dependent on claim 4, wherein the lever (11) is hinged to the suction surface (6) and wherein the lever (11) is configured so as to pass from the rest configuration where it at least partly protrudes from the suction surface (6) towards the outside of the hollow body (3), to the detection configuration where the lever (11) is retracted into the suction surface (6) towards the inside of the hollow body (3).

8. The device for manipulating according to one or more of the preceding claims, wherein the contact portion (4) is covered by deformable material.

9. The device for manipulating according to one or more of the preceding claims, wherein the device (1) comprises means for detecting the presence of the object (2) in contact with the contact portion (4), sensitive to the weight of the object (2) and configured so as to send a preferably pneumatic deactivating signal (S2) to the vacuum generating means (7) by manually activating a manual release organ (14), the deactivating signal (S2) allowing the object (2) to be released only when the weight of the object (2) falls below a preset weight threshold.

10. The device for manipulating according to claim 9, wherein the means for detecting the presence of the object (2) are configured so as to send the preferably pneumatic deactivating signal (S2) to the pneumatic distributor (9).

11. The device for manipulating according to one or more of claims 9 and 10, wherein the hollow body (3) is mounted on a suspension element (15) and is movable with respect thereto between at least one distal position following the action of the weight of the suspended object (2) and a proximal position following the coming to rest of the object (2) on the support surface and wherein the detection means of the presence of the object are configured so as to detect the distance between the suspension element (15) and the hollow body (3) and/or the configuration of elastic elements (16) operating between the suspension element (15) and the hollow body (3).

12. The device for manipulating according to one or more of the preceding claims, wherein the device (1) comprises a gripping member (17) for manually moving the device (1) in space.

13. The device for manipulating according to claim 12 when dependent on claim 11, wherein the gripping member (17) is preferably a handlebar connected directly to the suspension element (15).

14. The device for manipulating according to claim 12 when dependent on claim 11, wherein the gripping member (17) is preferably a handlebar connected directly to the suspension element (15) by means of an articulation comprising a cam (20) capable of simulating the weight resting on the supporting surface.

15. A manipulator (M) with a mechanical arm (22) comprising a device (1) for manipulating according to one or more of claims 1-14.
